# DEMANDE DE BREVET EUROPEEN

(11) **EP 3 223 207 A1**
(43) Date de publication de la demande: **27.09.2017**
(21) Numéro de dépôt: 17162757.3
(22) Date de dépôt: 24.03.2017
(51) Int. Cl.: G06Q 10/04, G06Q 50/06

(54) **PROCÉDÉ D'OPTIMISATION DE LA CONSOMMATION DE LA PUISSANCE PRODUITE PAR UNE SOURCE D'ÉLECTRICITÉ RENOUVELABLE**

(30) Priorité: 25.03.2016 FR 1652599
(71) Demandeur: Schneider Electric Industries SAS, 92500 Rueil-Malmaison (FR)
(72) Inventeur: RUEZ, Teddy, 38050 Grenoble Cedex 9 (FR); HAVEL, Aurélien, 38050 Grenoble Cedex 9 (FR); CLEMENCE, Michel, 38050 Grenoble Cedex 9 (FR)
(74) Mandataire: Brevalex

(57) **Abrégé**

L'invention concerne un procédé d'optimisation de la consommation, par des charges, d'une puissance produite par au moins une source renouvelable et au moins une source non intermittente connectées à un réseau de production et de distribution d'électricité, le procédé comprenant :
a. une étape de détermination d'un profil temporel d'une puissance renouvelable produite par l'au moins une source renouvelable ;
b. une étape de détermination, parmi des charges connectées au réseau, de contraintes d'utilisation desdites charges ;
c. une étape de détermination d'un plan de fonctionnement desdites charges permettant de maximiser la consommation de la puissance renouvelable produite par l'au moins une source renouvelable tout en respectant lesdites contraintes d'utilisation, cette détermination comprenant une évaluation de la consommation de la puissance renouvelable sous l'effet d'un décalage temporel de mise en marche des desdites charges.

## Description

### DOMAINE TECHNIQUE

Le domaine de l'invention est celui des micro réseaux de production et de distribution électrique. Plus particulièrement, l'invention concerne un procédé d'optimisation de la consommation de puissance électrique produite par une ou plusieurs sources d'électricité renouvelable.

### ÉTAT DE LA TECHNIQUE ANTÉRIEURE

Un micro réseau (« microgrid » selon la terminologie Anglo-Saxonne) est généralement un réseau électrique local destiné à produire et distribuer de l'énergie électrique dans des régions isolées et distantes des grands centres de production d'énergie électrique. Les régions isolées sont par exemple des îles, des régions montagneuses, ou encore des zones désertiques. Le principe de micro réseau s'applique également lorsqu'un bâtiment, quartier, campus, ou autre entité connecté à un large réseau de distribution souhaite gérer sa production d'énergie autrement et augmenter sa stabilité.

Les principaux intérêts des micros réseaux sont qu'ils peuvent fonctionner de manière autonome (en mode îloté, sans connexion au réseau public), et qu'ils se trouvent à proximité des zones de consommation (les charges). Ainsi, les pertes inhérentes aux réseaux de distributions longues distances sont limitées.

L'autonomie énergétique du micro réseau est généralement assurée par des sources d'électricité de différents types parmi lesquelles les groupes électrogènes occupent une place importante (nous parlons dans ce cas de source d'énergie synchrone).

En effet, du point de vue économique, un groupe électrogène représente un faible investissement de départ, et assure une production en électricité suffisamment flexible pour absorber des pics de consommations aux heures de pointes. Cependant, leur fonctionnement nécessite de grandes quantités de combustible (par exemple du diesel), ce qui alourdit, par conséquent, la facture énergétique, mais augmente également la pollution atmosphérique.

Afin de pallier ces problèmes économiques et environnementaux, les micro réseaux, sont hybrides, et comprennent également des sources d'électricité renouvelable telles que des sources d'électricité photovoltaïque. Le courant continu et la tension continue générés par les sources d'électricité renouvelable sont généralement transformés, par un onduleur, en courant et tension alternatifs à la fréquence f du réseau.

L'onduleur est généralement asservi selon une loi de commande lui conférant un contrôle par statisme (« Droop » selon la terminologie Anglo-Saxonne) en fréquence/puissance active P et en tension efficace (tension RMS)/puissance réactive Q. Le contrôle par statisme permet de connecter en parallèle l'onduleur avec des générateurs synchrones (par exemple des groupes électrogènes) sur le réseau de production et de distribution d'électricité. Cependant, les fluctuations et/ou l'intermittence de la production de puissance électrique des sources d'électricité renouvelable induisent une instabilité de la fréquence, de la tension et du courant alternatifs délivrés, via l'onduleur, par les sources d'électricité renouvelable. L'instabilité de la fréquence de la tension et du courant délivrés par les sources d'électricité renouvelable se répercutent directement sur la centrale de production et au réseau de distribution. Nous entendons par centrale de production toutes les sources d'électricité renouvelable, et toutes les sources d'électricité non renouvelable connectées au réseau de distribution et susceptibles de produire de la puissance électrique.

Afin de limiter les conséquences et gênes occasionnées par une telle instabilité, les sources d'électricité renouvelable ne dépassent généralement pas 30 % de la puissance nominale dudit réseau (nous parlons d'un taux de pénétration des sources d'électricité renouvelable limité à 30 % du nominal). Les fluctuations de production de puissance électrique renouvelable sont alors compensées par des groupes électrogènes en permanence en marche.

Afin d'augmenter le taux de pénétration des sources d'électricité renouvelable, le concept de générateur virtuel ou générateur virtuel synchrone (« Synchronous Virtual Generator » selon la terminologie Anglo-Saxonne) a été développé, et l'homme du métier pourra consulter le document [1] décrivant en détails les fondements des générateurs virtuels. Un générateur virtuel comprend, en général, une source d'électricité renouvelable, telle que des panneaux photovoltaïques ou des éoliennes, et un onduleur. La mise en place de générateurs virtuels permet d'atteindre un taux de pénétration des sources d'électricité renouvelable de 100 %.

Bien qu'offrant une avancée considérable en terme de taux de pénétration et de réduction de la consommation de combustible, cette solution ne traite pas de l'optimisation de la consommation de la puissance et/ou de l'énergie électrique produite par les sources d'électricité renouvelable.

En effet, les solutions précitées ne permettent pas de réduire la consommation de combustible par les groupes électrogènes lorsque la production en énergie renouvelable est arrêtée (la nuit, par exemple, lorsque les sources d'électricité photovoltaïque ne produisent plus de puissance électrique).

Par ailleurs, afin d'assurer l'équilibre en fréquence de la tension et du courant du réseau, il peut être souhaitable de limiter, par écrêtement, la production de puissance électrique renouvelable. Cet écrêtement est d'autant plus souhaitable que le potentiel de production de puissance électrique renouvelable installé atteint 100% de la puissance nominale du réseau de production et de distribution électrique. L'écrêtement de la production de puissance électrique renouvelable est généralement pris en charge par l'onduleur associé à ladite source, et dans la mesure de ses capacités.

Un objectif de la présente invention est alors de proposer un procédé d'optimisation de la consommation de la puissance et/ou de l'énergie électrique produite par une source d'électricité renouvelable de manière à réduire la consommation de combustible par des groupes électrogènes également connectés au réseau de production et de distribution électrique.

Un autre objectif de la présente invention est également de maximiser la production de puissance électrique renouvelable par les sources d'électricité renouvelable.

Un autre objectif de l'invention est également d'optimiser la puissance électrique renouvelable à installer.

### EXPOSÉ DE L'INVENTION

Les buts de l'invention sont, au moins en partie, atteints, par un procédé d'optimisation de la consommation, par des charges, de la puissance produite par au moins une source d'électricité renouvelable et au moins une source d'électricité non intermittente connectées à un réseau de production et de distribution d'électricité, le procédé comprenant :
a. une étape de prévision d'un profil temporel de puissance électrique renouvelable produite par l'au moins une source d'électricité renouvelable pour une période temporelle à venir;
b. une étape de détermination, parmi des charges connectées au réseau, de contraintes d'utilisation desdites charges ;
c. une étape de détermination d'un plan de fonctionnement desdites charges permettant de maximiser la consommation de la puissance électrique renouvelable produite par l'au moins une source d'électricité renouvelable, sur la période temporelle à venir, tout en respectant lesdites contraintes d'utilisation, cette détermination comprenant une évaluation de la consommation de la puissance électrique renouvelable sous l'effet d'un décalage temporel de mise en marche de l'une ou l'autre desdites charges.

Ainsi, la considération des contraintes d'utilisation desdites charges connectées à la centrale de production et au réseau de distribution permet d'adapter les modes de consommation de puissance électrique, et de favoriser une consommation de puissance électrique dès lors que la source d'électricité renouvelable produit de la puissance électrique. La consommation de la puissance électrique renouvelable se fait en temps réel, et ne nécessite aucun mode d'accumulation de puissance et/ou d'énergie permettant de différer ladite consommation. En effet, selon l'invention, il est désormais possible de décaler de manière temporelle, au moins en partie, la phase de consommation de puissance électrique de charges consommant, habituellement de manière exclusive, de la puissance électrique délivrée par des sources d'électricité non intermittentes.

Par ailleurs, l'invention permet de considérer une « pré consommation » de puissance électrique par des charges dès lors que la source d'électricité renouvelable produit de la puissance électrique de manière à élever l'état énergétique desdites charges. L'élévation de l'état énergétique desdites charges permet ainsi une moindre consommation de puissance électrique dès lors que la source d'électricité renouvelable cesse sa production de puissance électrique.

L'invention permet ainsi de réduire la consommation de puissance produite par la source d'électricité non intermittente.

Selon un mode de réalisation, l'étape c. de détermination d'un plan de fonctionnement des charges est également adaptée pour minimiser la consommation, par les charges, de la puissance électrique produite par l'au moins une source d'électricité non intermittente.

Ainsi, il peut être envisagé de réduire également la capacité de production de puissance électrique par la source d'électricité non intermittente.

Selon un mode de réalisation, l'étape c. de détermination du plan de fonctionnement des charges est exécutée par un algorithme mathématique modélisant la puissance électrique renouvelable produite par l'au moins une source d'électricité renouvelable, la consommation de la puissance électrique par les charges en fonction de leurs contraintes d'utilisation, l'algorithme mathématique étant avantageusement un algorithme du type Séparation et Evaluation, et Plans Coupants.

Le problème mathématique peut, avantageusement, être formulé selon les techniques de Programmation Linéaire Mixte en Nombres Entiers..

Selon un mode de réalisation, l'au moins une source d'électricité renouvelable présente une capacité de production de puissance électrique dimensionnée pour qu'un maximum de charges, parmi les charges connectées au réseau, consomme de la puissance électrique produite par ladite source d'électricité renouvelable.

La puissance électrique produite par l'au moins une source d'électricité renouvelable est avantageusement consommée en temps réel. Autrement dit, aucun système d'accumulation de puissance et/ou d'énergie n'est nécessaire pour différer ladite consommation.

Selon un mode de réalisation, la source d'électricité renouvelable comprend au moins une des sources choisie parmi : une source d'électricité photovoltaïque, une source d'électricité éolienne.

Selon un mode de réalisation, la source d'électricité renouvelable comprend un système de production d'électricité renouvelable, un onduleur destiné à transformer la puissance produite par ledit système de production en une tension et un courant alternatifs, l'onduleur et le système de production étant contrôlés par une loi de commande de sorte que la source d'électricité renouvelable forme un générateur virtuel.

Selon un mode de réalisation, le réseau de production et de distribution électrique a une puissance nominale, et l'au moins une source d'électricité renouvelable a une capacité de production de puissance électrique supérieure à ladite puissance nominale.

Selon un mode de réalisation, le réseau de production et de distribution électrique est un micro réseau.

Selon un mode de réalisation, des groupes électrogènes sont également connectés au réseau de production et de distribution électrique, et en parallèle avec la source d'électricité renouvelable.

### BRÈVE DESCRIPTION DES DESSINS

D'autres caractéristiques et avantages apparaîtront dans la description qui va suivre des modes de mise en oeuvre d'un procédé d'optimisation de la consommation, par des charges, de la puissance produite par au moins une source d'électricité renouvelable et au moins une source d'énergie non intermittente, donnés à titre d'exemples non limitatifs, en référence aux dessins annexés dans lesquels :

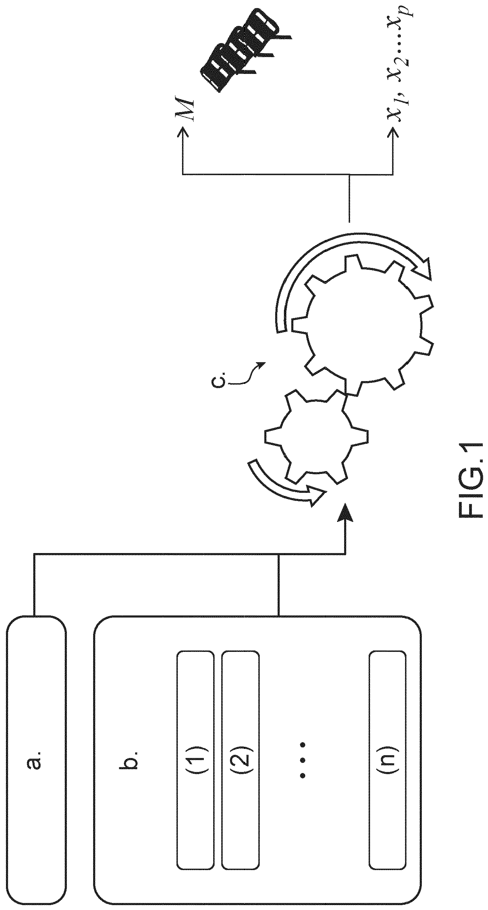

- la figure 1 est un schéma de principe des étapes d'un procédé selon l'invention ;

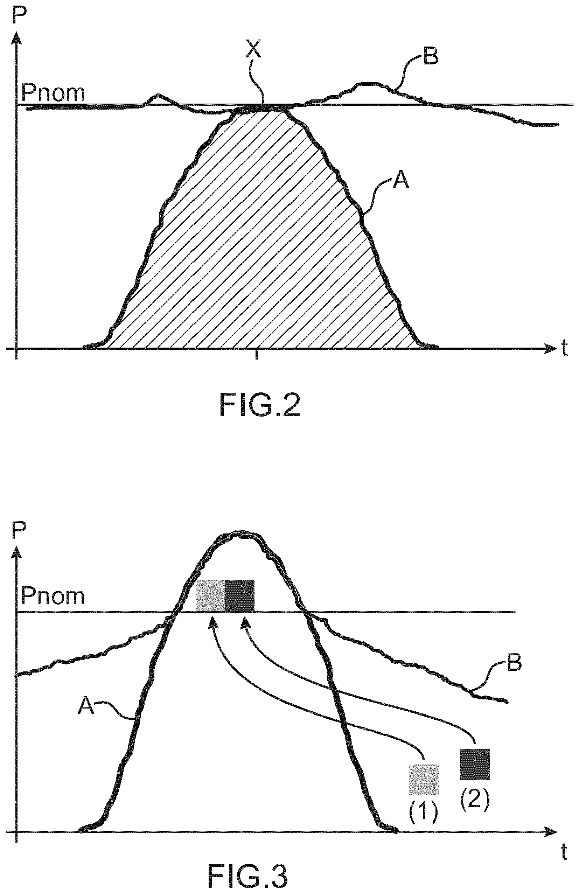

- la figure 2 est un graphique représentant la puissance nominale, Pₙₒₘ, d'un micro réseau, la puissance électrique (courbe A) produite et délivrée par une source d'électricité renouvelable au micro réseau, et la puissance électrique (courbe B) consommée par des charges connectées au micro réseau, les courbes sont représentées en fonction du temps t (sur l'axe horizontal) ;
- la figure 3 est un graphique représentant la mise en oeuvre d'un procédé d'optimisation selon l'invention, le graphique représentant la puissance nominale, Pₙₒₘ, d'un micro réseau, la puissance électrique (courbe A) produite et délivrée par une source d'électricité renouvelable au micro réseau, et la puissance électrique (courbe B) consommée par des charges connectées au micro réseau, les courbes étant représentées en fonction du temps t (sur l'axe horizontal).

### EXPOSÉ DÉTAILLÉ DE MODES DE RÉALISATION PARTICULIERS

La présente invention va maintenant être décrite dans le contexte des micro réseaux, mais peut très bien s'étendre à tout de type de réseau de production et de distribution d'électricité. Ainsi, sauf indication contraire, la mention « micro réseau » pourra aussi bien signifier micro réseau que réseau.

Dans la présente invention, nous considérons des charges susceptibles de consommer de la puissance et/ou de l'énergie électrique produite par des sources d'électricité (renouvelable ou non). Il est entendu que lorsque des charges consomment de la puissance électrique sur une plage temporelle, lesdites charges consomment de l'énergie électrique. Nous limiterons cependant l'exposé de l'invention à la production et à la consommation de puissance électrique, étant entendu que dès lors que lesdites production et/ou consommation se déroulent dans le temps il s'agira d'une production et/ou d'une consommation d'énergie électrique.

Nous considérons donc un micro réseau comprenant au moins une source d'électricité renouvelable.

En référence à la figure 1, nous allons donc décrire un procédé d'optimisation de la consommation de la puissance électrique produite par au moins une source d'électricité renouvelable.

Le micro réseau selon l'invention comprend donc :
- au moins une source d'électricité renouvelable délivrant au micro réseau une puissance électrique renouvelable,
- au moins une charge ou une pluralité de charges, destinées à consommer de la puissance électrique délivrée au micro réseau.

Le micro réseau peut également comprendre des sources d'électricité non intermittentes telles que des groupes électrogènes. Les sources d'électricité non intermittentes consomment un combustible pour produire et délivrer de la puissance électrique au micro réseau.

Nous entendons par charge un élément connecté au réseau et qui consomme de la puissance électrique présente sur ledit réseau (la puissance électrique, tel que précédemment précisé, est consommée sur une plage temporelle, et peut donc être associée à une énergie consommée).

Le procédé d'optimisation comprend une étape a. de prévision d'un profil temporel de production de puissance électrique par la source d'électricité renouvelable pour une période temporelle à venir.

La période temporelle à venir peut couvrir par exemple un cycle d'une journée, ou de plusieurs jours.

La prévision du profil temporel de production de puissance peut intervenir du jour pour le lendemain, mais peut également correspondre à des prévisions à plus long terme, par exemple d'une semaine, ou d'un mois.

Les sources d'électricité renouvelable sont souvent qualifiées de sources d'électricité intermittentes car elles sont très dépendantes de facteurs non contrôlables telles que les conditions climatiques.

Ainsi une ou des sources d'électricité renouvelable peut comprendre une ou des source(s) d'électricité photovoltaïque, et/ou une ou des source(s) d'électricité éolienne. Les sources d'électricité photovoltaïque ne produisent de la puissance électrique qu'en présence d'ensoleillement. Par ailleurs, le profil temporel de puissance électrique produite par les sources d'électricité photovoltaïque dépend des conditions climatiques, mais également de l'orientation desdites sources par rapport au soleil. En effet, des panneaux photovoltaïques orientés plein sud ne présentent pas le même profil temporel de puissance électrique produite que des panneaux photovoltaïques orientés Est ou Ouest.

Par ailleurs, les panneaux photovoltaïques peuvent présenter une orientation variable par rapport au soleil (nous disons qu'ils suivent le soleil) de manière à maximiser la puissance électrique qu'ils produisent.

A titre d'exemple, la figure 2 présente le profil de production de puissance électrique (P selon l'axe des ordonnées) d'une source d'électricité photovoltaïque (courbe A) au cours d'une journée (temps t selon l'axe des abscisses). Dans le cas illustré à la figure 2, la source d'électricité photovoltaïque est orientée plein sud de sorte que le profil présente une forme en cloche et un maximum de production de puissance électrique est observé à midi (point X sur la courbe A). Le niveau Pₙₒₘ est la puissance nominale du micro réseau, à savoir la puissance électrique moyenne consommée par les charges connectées au micro réseau.

Des profils plus « aplatis » (non représentés) peuvent être observés pour d'autres orientations des sources d'électricité photovoltaïque.

Les sources d'électricité éolienne sont également dépendantes des conditions climatiques. En effet, des éoliennes ne produisent de la puissance électrique que pour des vents soufflant dans une gamme de vitesses prédéterminée.

Le profil temporel de production de puissance électrique renouvelable va donc dépendre du type de source d'électricité renouvelable.

La détermination ou la prédiction du profil temporel de production de puissance électrique renouvelable peut être basée sur un modèle prédictif. En effet, la connaissance des facteurs influençant la production de puissance électrique renouvelable par un type donné de source d'électricité renouvelable peut permettre de prédire le profil de production de puissance électrique par ladite source.

Ainsi, la connaissance des conditions météorologiques et des spécifications des sources d'électricité photovoltaïque permet de prédire le profil temporel de production de puissance électrique par les sources d'électricité photovoltaïque.

La détermination ou la prédiction du profil temporel de production de puissance électrique renouvelable peut également être basé sur l'historique de production de puissance électrique renouvelable. En effet, le suivi journalier de la production de puissance électrique renouvelable peut permettre d'anticiper la puissance électrique renouvelable qui sera produite dans le futur. Ce type de détermination sera particulièrement avantageux dès lors que les facteurs non contrôlables influençant la production de puissance électrique renouvelable sont reproductibles dans le temps. Ainsi, dans des régions présentant un ensoleillement stable et reproductible, il est possible de prévoir la puissance électrique renouvelable produite par des sources d'électricité photovoltaïque sur des échelles de temps, par exemple, de l'ordre de l'année. Ce modèle peut être affiné en prenant en considération les prévisions météorologiques.

Le procédé selon l'invention comprend également une étape b. de détermination, parmi des charges connectées au réseau, des contraintes d'utilisation desdites charges. Les charges sont représentées par les nombres entiers entre parenthèses (1), (2),..., (n) dans le cadre b. de la figure 1.

Les charges peuvent également présenter des contraintes de mise en marche dont il peut être tenu compte lors de l'exécution de l'étape b.

Par contrainte de mise en marche d'une charge, nous entendons les modalités de mise en marche de ladite charge pour permettre son utilisation selon des spécifications prédéterminées. Autrement dit, une contrainte de mise en marche d'une charge donnée correspond au temps et à la puissance nécessaires à ladite charge pour atteindre un état énergétique donné. La mise en marche de ladite charge comprend la consommation de puissance électrique. Symétriquement l'extinction d'une charge doit respecter certaines contraintes.

Par contrainte d'utilisation, nous entendons le service rendu par une charge donnée. Autrement dit, une contrainte d'utilisation correspond à une gamme d'états ou un état, avantageusement une gamme d'états énergétiques ou un état énergétique, dans lequel doit se trouver la charge afin d'être utilisable selon ses spécifications de fonctionnement. Les spécifications de fonctionnement sont définies comme une consigne à atteindre par un paramètre physique de ladite charge. Autrement dit, les spécifications de fonctionnement sont l'ensemble d'exigences à satisfaire par la charge pour être utilisable. Ledit état de charge est atteint par consommation de puissance électrique. La gamme d'états peut être une gamme d'états énergétiques, mais peut également être associé à un stock. Par exemple, la contrainte d'utilisation peut être une gamme de températures que l'eau d'un chauffe-eau doit atteindre pour être utilisable. Dans le cas d'un chauffage ou d'une climatisation d'un environnement fermé, la contrainte d'utilisation peut-être la gamme de températures dans laquelle doit se trouver la température dudit environnement. Dans le cas d'une usine disposant d'un stock, la contrainte d'utilisation sera le stock minimal dont doit disposer l'usine à différent pas de temps, et le stock maximal que l'usine dispose et qui ne pourra en aucun cas être dépassé (le stock peut correspondre une quantité de produit fabriqué dans une usine). Dans le cas d'un château d'eau, la contrainte d'utilisation correspond à la quantité minimale d'eau dont doit disposer le château d'eau à différents pas de temps et à la quantité maximale d'eau physiquement contrainte par ledit château d'eau.

Tel que mentionné précédemment, les charges connectées au micro réseau consomment, pendant une période de temps donnée, de la puissance électrique produite par la ou les sources d'électricité renouvelable, et les sources d'électricité non intermittentes telles que des groupes électrogènes.

Les charges connectées au micro réseau sont soumises à des contraintes de mise en marche et d'utilisation.

Par exemple, nous pouvons citer le cas d'un chauffe-eau qui doit être en mesure de délivrer de l'eau chaude dans une gamme de températures données, et sur une plage horaire donnée. En général, les chauffe-eaux sont programmés pour chauffer l'eau la nuit, de sorte que, le matin, la température de l'eau soit comprise dans une gamme de températures donnée, par exemple entre 60 et 80°C. Selon ce mode de fonctionnement connu de l'art antérieur, les chauffe-eaux consomment de la puissance électrique produite par des sources d'électricité non intermittentes (les groupes électrogènes).

Dans le cadre de la présente invention, il est alors proposé d'examiner l'effet d'un décalage temporel de la mise en marche de la charge, dans l'exemple donné les chauffe-eaux, au moment où les sources d'électricité renouvelable produisent de la puissance électrique renouvelable.

Le décalage temporel de la mise en marche d'une charge donnée peut consister en une pré-consommation de puissance électrique de manière à amener ladite charge dans une gamme d'états ou un état (par exemple une gamme d'états énergétiques ou un état énergétique) donné pendant la phase de production de puissance électrique renouvelable par la source d'électricité renouvelable. Cette pré-consommation permet de diminuer la consommation de puissance électrique par ladite charge lorsque la source d'électricité renouvelable ne produit plus de puissance électrique. Ainsi, dans l'exemple du chauffe-eau, une mise en route dès lors que la production de puissance électrique renouvelable est appréciable, permettra de consommer moins de puissance non intermittente délivrée par les groupes électrogènes pour maintenir la température de l'eau chaude dans le chauffe-eau dans la gamme de température prédéterminée.

Cette analyse peut être exécutée pour chacune des charges connectées au micro réseau.

Le tableau 1 suivant donne d'autres exemples de charges et des contraintes de mise en marche et d'utilisation associées.

**Tableau 1 :**

| **Charge** | **Contraintes de mise en marche et d'utilisation à chaque instant** |
|---|---|
| Chauffe-eau | Assurer la continuité de service, et maintenir la température de l'eau dans une gamme de températures donnée |
| Entrepôt froid | Température intérieure maintenue dans une gamme de températures donnée |
| Eau potable/château d'eau | Assurer un volume suffisant en eau pour assurer les besoins |
| Système de chauffage, ventilation et climatisation | Maintenir la température dans une zone de confort |
| Batterie | Maintenir un niveau de charge minimum |

L'étape b. du procédé selon l'invention comprend donc la détermination des contraintes d'utilisation des charges connectées au micro réseau. Cette analyse, bien que plus détaillée dans le cadre des chauffe-eaux, ne se limite pas aux seuls chauffe-eaux, et s'applique donc à tout type de charges. L'analyse permet de rendre compte de la flexibilité de fonctionnement et d'utilisation des charges considérées.

Par flexibilité de fonctionnement et d'utilisation, nous entendons la possibilité de décaler de manière temporelle la mise en marche d'une charge sans pour autant affecter la réalisation de sa contrainte d'utilisation. Le décalage temporel de la mise en marche d'une charge correspond à un décalage total ou partiel de la consommation de puissance électrique par ladite charge.

Par flexibilité de fonctionnement et d'utilisation on entend aussi la variation à la baisse ou à la hausse de la consommation de la puissance électrique par des charges continues. Par charges continues, on entend des charges consommant en permanence de la puissance électrique en conditions normales d'utilisation et selon un fonctionnement connu de l'art antérieur.

Le procédé selon l'invention comprend également une étape c. de détermination d'un plan de fonctionnement des charges permettant de maximiser la consommation de la puissance électrique produite par l'au moins une source d'électricité renouvelable, sur la période temporelle à venir, tout en respectant lesdites contraintes d'utilisation, cette détermination comprenant une évaluation de la consommation sous l'effet d'un décalage temporel de mise en marche de l'une ou l'autre desdites charges ou d'une modulation de puissance électrique fournie à la charge.

Par plan de fonctionnement des charges, nous entendons la puissance électrique consommée pendant des plages temporelles, (par exemple des pas de 30 minutes, de 10 minutes...) par lesdites charges. Le plan de fonctionnement est ainsi défini pour chacune des charges connectées au micro réseau, et comprend, pour chaque charge, une ou plusieurs plages temporelles de fonctionnement ainsi que la puissance électrique consommée par ladite charge. Le plan de fonctionnement établit ainsi, pour l'ensemble des charges connectées au réseau, les modalités de mise en marche de chacune desdites charges, les modalités de mise en marche comprenant les plages temporelles de fonctionnement et la puissance électrique consommée pendant lesdites plages temporelles.

L'exécution de cette étape c. comprend la sélection de charges, parmi les charges connectées au réseau, dont les contraintes de mise en marche et d'utilisation permettent un décalage temporel de mise en marche. Le décalage temporel est ajusté de sorte que les charges consomment de la puissance électrique dès lors que la source d'électricité renouvelable produit et délivre de la puissance électrique sur le micro réseau.

Les charges sélectionnées pour être mises en marche, dès lors que la source d'électricité renouvelable produit et délivre de la puissance électrique sur le micro réseau, peuvent consommer de la puissance électrique également lorsque la source d'électricité renouvelable ne produit ni ne délivre de puissance électrique sur le micro réseau. Dans ce cas de figure, la puissance électrique est délivrée par la source d'énergie non intermittente. Cette répartition temporelle en terme de consommation de puissance électrique de la part des charges sélectionnées permet d'augmenter la consommation de puissance électrique renouvelable et de diminuer la consommation de puissance électrique délivrée par la source d'électricité non intermittente. Il est ainsi possible de diminuer la quantité de combustible nécessaire au bon fonctionnement du micro réseau.

De manière particulièrement avantageuse, l'étape c. peut être exécutée à l'aide d'un algorithme mathématique. Le profil temporel de production d'énergie renouvelable de la source d'électricité renouvelable ainsi que les contraintes de mise en marche et d'utilisation des charges connectées au micro réseau constituent des données d'entrée dudit modèle mathématique.

Le modèle mathématique est ainsi adapté pour modéliser le fonctionnement du micro réseau en fonction des données d'entrée.

Le modèle mathématique comprend une fonction objectif, des contraintes, des variables de décision et des paramètres.

Le modèle mathématique comprend la minimisation d'une fonction objectif sous contraintes.

Selon l'invention, la fonction objectif peut représenter un « coût » d'exploitation du micro réseau. Le « coût » d'exploitation du micro réseau est par exemple associé à une consommation de combustible par les sources d'électricité non intermittentes, mais peut également prendre en compte (et de manière non limitative) :
- la satisfaction d'utilisateurs des différentes charges ;
- la maximisation de la consommation de la puissance électrique renouvelable consommée par les charge ;
- la maximisation de la production de la puissance électrique renouvelable.

Les contraintes comprennent les contraintes de fonctionnement et, éventuellement de mise en marche des charges. Parmi lesdites charges sont identifiées également les charges dont la mise en marche ne peut être décalée. Ces charges, pour lesquelles la mise en marche ne peut être décalée, sont qualifiées de charges non flexibles, tandis que les autres charges sont des charges flexibles. La demande de consommation de puissance des charges non flexible est qualifiée de demande fatale.

Afin d'assurer la stabilité du micro réseau, une contrainte de réserve d'énergie relative aux moyens de production non-intermittents peut être considérée. Les contraintes non linéaires comme par exemple l'évolution de la température d'une chambre froide peuvent être linéarisées.

Le modèle mathématique et les contraintes se basent sur un certain nombre de paramètres d'entrée :
- les profils de production de puissance électrique des sources d'électricité renouvelable et des sources d'électricité non intermittentes (ces profils sont supposés connus),
- les coûts de fonctionnement des différentes charges et moyens de production,
- les paramètres de fonctionnement des différentes charges et moyens de production.

Le but du problème de minimisation est de trouver les valeurs optimales de l'ensemble des variables de décision. Ces variables de décision sont propres à chaque charge pouvant être alors de différentes natures en fonction de la charge (temps, puissance).

Par exemple, les plages temporelles (heures de fonctionnement) et puissances de fonctionnement des charges flexibles (rendant compte des contraintes de mise en marche et d'utilisation desdites charges), ainsi que les différents moyens de production de puissance électrique non intermittents sont des variables de décision du problème. Ces variables peuvent être des nombres entiers ou réels.

Le problème ainsi formulé avec la fonction objectif et ses contraintes est analogue au problème du « sac à dos » (« Knapsack Problem » selon la terminologie Anglo-Saxonne) bien connu de l'homme du métier et décrit dans le document [2].

La résolution d'un tel problème peut avantageusement être réalisée par un algorithme combinant des techniques de Séparation et Evaluation (« Branch & Bound » selon la terminologie Anglo-Saxonne) et de plans coupants (« Cutting Plane » selon la terminologie Anglo-Saxonne) et décrit dans le document [2].

La résolution du problème par l'algorithme mathématique permet une meilleure optimisation de la consommation de la puissance électrique consommée par les charges connectées au micro réseau.

Les étapes de modélisation et/ou de résolution de l'algorithme mathématique peuvent avantageusement être exécutées par un calculateur ou un ordinateur.

L'optimisation peut être réalisée de manière statique ou bien de manière dynamique, prenant alors en compte les prévisions de production d'énergie renouvelable périodiquement et établissant un plan (ou calendrier) de production/consommation adaptatif.

L'optimisation statique peut être préférée lorsque la production de puissance électrique renouvelable présente un caractère reproductible. Par exemple, le cas de sources d'électricité photovoltaïque connectées à un micro réseau dans une région fortement ensoleillée toute l'année peut être adapté à une optimisation statique.

L'optimisation dynamique, plus performante pour optimiser la part de puissance électrique produite par lesdites sources d'électricité renouvelable, implique de mettre en place des dispositifs de contrôles communicants sur les flexibilités, contrairement à l'optimum statique où les flexibilités peuvent être réglées de manière définitive.

Par contre, la présence de sources d'électricité éolienne dans le micro réseau peut imposer une optimisation dynamique lors de l'étape c.

Ainsi, les données de sortie de l'étape c. comprennent :
- la sélection des charges pouvant être mises en route pendant la phase de production de puissance électrique renouvelable par la source d'électricité renouvelable (les données x₁, x₂, .... , xₙ de la figure 1) ;
- la puissance électrique renouvelable consommable par les charges sélectionnées.

De manière particulièrement avantageuse, l'étape c. d'optimisation peut permettre de dimensionner également la source d'électricité renouvelable, à savoir la capacité de production de puissance électrique renouvelable.

Ainsi, le procédé selon l'invention, permet également d'installer un potentiel de puissance électrique renouvelable supérieur à la puissance nominale du micro réseau.

Le procédé d'optimisation selon l'invention peut résulter en un décalage temporel de la mise en marche de charges de sorte que lesdites charges consomment une puissance électrique supérieure à la puissance nominale du micro réseau. Le procédé d'optimisation selon l'invention conduira donc à l'installation d'une capacité de production de puissance électrique renouvelable supérieure à la puissance nominale du micro réseau.

Ainsi, le décalage temporel de la mise en marche des charge permet d'avoir un taux de pénétration des énergies renouvelable supérieur à 100%.

Dans ce cas de figure, la ou les sources d'électricité renouvelable peuvent avantageusement être configurées en générateurs virtuels.

A cet égard, nous entendons par générateur virtuel, un générateur virtuel se comportant comme un groupe électrogène.

Pour ce faire, la source d'électricité renouvelable peut comprendre un système de production d'électricité renouvelable, et un onduleur. L'onduleur est destiné à transformer la puissance produite par ledit système de production en une tension et un courant alternatifs. L'onduleur et le système de production d'électricité renouvelable peuvent être contrôlés par une loi de commande de sorte que la source d'électricité renouvelable se comporte comme un générateur virtuel.

A titre d'illustration, la figure 3 représente de manière schématique la mise en oeuvre du procédé selon l'invention. L'axe des abscisses représente le temps t, et l'axe des ordonnées représente la puissance électrique P. La ligne horizontale Pₙₒₘ représente la puissance nominale du micro réseau. La courbe A représente la puissance électrique renouvelable produite par une source d'électricité renouvelable (par exemple une source d'énergie photovoltaïque), et la courbe B la puissance électrique consommée par les charges. Dans cet exemple, la puissance électrique renouvelable dépasse la puissance nominale du micro réseau. Des charges (les charges (1) et (2) en gris et noir respectivement) sont « déplacées ». Selon les procédés connus de l'art antérieur, pour des raisons de contraintes de mise en marche et d'utilisation, les charges (1) et (2) consomment de la puissance électrique en dehors des périodes de production de puissance électrique renouvelable (ce sont par exemple des chauffe-eaux). Cependant, le procédé d'optimisation selon l'invention permet d'envisager un préchauffage desdits chauffe-eaux dès lors que la source d'électricité renouvelable produit et délivre de la puissance sur le micro réseau.

Le procédé selon l'invention permet donc d'optimiser la consommation de la puissance électrique renouvelable produite par des sources d'électricité renouvelable, et minimiser l'écrêtage. Par ailleurs, le taux de pénétration des énergies renouvelables peut également dépasser la puissance nominale du réseau, et ainsi permettre d'avoir moins recourt aux sources d'électricité non intermittentes. Il en résulte donc une diminution de la consommation de combustible.

### RÉFÉRENCES

[1] Hussam Alatrash et. al., "Generator Emulation Controls for Photovoltaic Inverters", IEEE TRANSACTIONS ON SMART GRID, Vol. 3, No. 2, June 2012.
[2] Garfinkel, Robert S., and George L. Nemhauser. Integer programming. Vol. 4. New York: Wiley, 1972.).

## Revendications

1. Procédé d'optimisation de la consommation, par des charges, d'une puissance électrique produite par au moins une source d'électricité renouvelable et au moins une source d'électricité non intermittente connectées à un réseau de production et de distribution d'électricité, le procédé comprenant :
a. une étape de prévision d'un profil temporel d'une puissance électrique renouvelable produite par l'au moins une source d'électricité renouvelable pour une période temporelle à venir;
b. une étape de détermination, parmi des charges connectées au réseau, de contraintes d'utilisation desdites charges ;
c. une étape de détermination d'un plan de fonctionnement desdites charges permettant de maximiser la consommation de la puissance électrique renouvelable produite par l'au moins une source d'électricité renouvelable, sur la période temporelle à venir, tout en respectant lesdites contraintes d'utilisation, cette détermination comprenant une évaluation de la consommation de la puissance électrique renouvelable sous l'effet d'un décalage temporel de mise en marche de l'une ou l'autre desdites charges.

2. Procédé selon la revendication 1, dans lequel l'étape c. de détermination du plan de fonctionnement des charges est également adaptée pour minimiser la consommation, par les charges, de puissance électrique produite par l'au moins une source d'électricité non intermittente.

3. Procédé selon la revendication 1 ou 2, dans lequel l'étape c. de détermination du plan de fonctionnement des charges est exécutée par un algorithme mathématique modélisant la puissance électrique renouvelable produite par l'au moins une source d'électricité renouvelable, la consommation de la puissance électrique par les charges en fonction de leurs contraintes d'utilisation, l'algorithme mathématique étant résolu avantageusement par une combinaison de techniques d'un algorithme du type Séparation et Evaluation, et Plans Coupants.

4. Procédé selon l'une des revendications 1 à 3, dans lequel l'au moins une source d'électricité renouvelable présente une capacité de production de puissance électrique renouvelable dimensionnée pour qu'un maximum de charges, parmi les charges connectées au réseau, consomme de la puissance électrique renouvelable produite par ladite au moins une source d'électricité renouvelable.

5. Procédé selon l'une des revendications 1 à 4, dans lequel l'au moins une source d'électricité renouvelable comprend au moins une source choisie parmi une source d'électricité photovoltaïque et une source d'électricité éolienne.

6. Procédé selon l'une des revendications 1 à 5, dans lequel l'au moins une source d'électricité renouvelable comprend un système de production d'électricité renouvelable, un onduleur destiné à transformer une puissance électrique produite par ledit système de production en une tension et un courant alternatifs, l'onduleur et le système de production d'électricité renouvelable étant contrôlés par une loi de commande de sorte que la source d'électricité renouvelable forme un générateur virtuel.

7. Procédé selon l'une des revendications 1 à 6, dans lequel le réseau de production et de distribution électrique a une puissance nominale, et l'au moins une source d'électricité renouvelable a une capacité de production de puissance électrique supérieure à ladite puissance nominale.

8. Procédé selon l'une des revendications 1 à 7, dans lequel le réseau de production et de distribution électrique est un micro réseau.

9. Procédé selon l'une des revendications 1 à 8, dans lequel des groupes électrogènes sont également connectés au réseau de production et de distribution électrique, et en parallèle avec l'au moins une source d'électricité renouvelable.
